# EUROPEAN PATENT APPLICATION

(11) **EP 1 052 447 A2**
(43) Date of publication of application: **15.11.2000**
(21) Application number: 00110385.2
(22) Date of filing: 15.05.2000
(51) Int. Cl.: F21S 8/10

(54) **Vehicle discharge lighting unit**

(30) Priority: 14.05.1999 JP 13430199
(71) Applicant: Stanley Electric Co., Ltd., Meguro-ku Tokyo 153-8636 (JP)
(72) Inventor: Miyata, Osamu, Tokyo, 153-8636 (JP); Hirata, Hisao, Tokyo, 153-8636 (JP); Yaguchi, Yasuhisa, Tokyo, 153-8636 (JP); Iwaki, Kunio, Tokyo, 153-8636 (JP); Satoh, Isamu, Tokyo, 153-8636 (JP); Miyata, Osamu, Tokyo, 153-8636 (JP); Hirata, Hisao, Tokyo, 153-8636 (JP); Yaguchi, Yasuhisa, Tokyo, 153-8636 (JP); Iwaki, Kunio, Tokyo, 153-8636 (JP); Satoh, Isamu, Tokyo, 153-8636 (JP)
(74) Representative: Geyer, Ulrich F., Dr. Dipl.-Phys.

(57) **Abstract**

A vehicle discharge lighting unit (1) comprises a bulb mounting slot (3a), of a channel diameter for fitting with an outer bulb section (2a) of a discharge lamp (2), provided at a resin base (3), a flange (41a) for mounting a driver case (4) for supporting the resin base (3) and for housing a driver unit (5) to a reflector (10), and a burner band (6) mounting section extending along the direction of the discharge chamber (2b) of said discharge lamp (2) and projecting into the reflector (10). Here, the driver case (5) can be separated into a front case (41A)and a rear case (41B). The resin base (3) and the driver case (4) can therefore be the most appropriate shape while improving the dielectric strength so that when either has become defect, just the part that has become defect is replaced.

## Description

### BACKGROUND OF THE INVENTION

### 1. Field of the Invention:

The present invention relates to a vehicle headlamp, and more specifically to a structure for a lighting unit adopting a discharge lamp such as a metal halide discharge lamp etc. as a light source for lighting up a headlamp.

### 2. Description of Related Art:

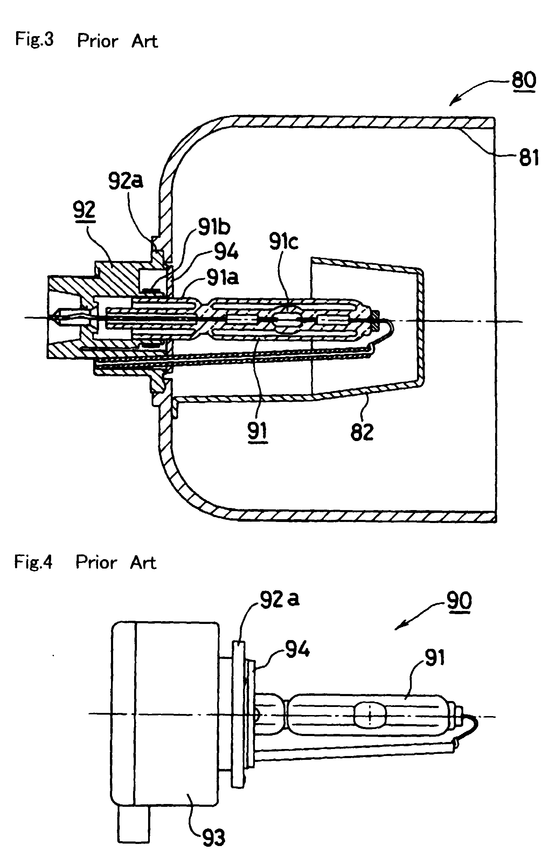

Figure 3 discloses a prior art discharge lamp 91 in a lighting unit. When this type of discharge lamp 91 is adopted as a light source for a headlamp 80, a resin base 92 is provided, at a predetermined position of a reflector 81 of the headlamp 80. A flange section 92a is provided at the resin base 92, so as to provide a predetermined positioning with respect to the reflector 81

A metal burner band 91b is mounted at an outer bulb section 91a of the discharge lamp 91 and is welded to the resin base 92. The position of the discharge lamp 91 and the resin base 92 is decided taking the flange section 92a as a reference, and a discharge chamber 91c can be given a predetermined position by just fitting to the reflector 81 of the headlamp 80. In the drawings, numeral 94 indicates a ceramic plate that is provided to protect the resin base 92 from high temperature during the time the discharge lamp 91 is lit.

When the discharge lamp 91 is started up, approximately 25,000V is applied to the lamp. Only the resin base 92 is mounted with the above configuration and wiring has to be provided to supply the high voltage to the resin base 92. However, this high voltage wiring reaches the outside of the headlamp 80 and therefore there is a danger that electric shocks, etc. might occur.

In order to resolve this problem, as shown in FIG. 4, for example, Japanese Patent Publication Laid-open No. HEI. 8-315624, a driver case 93 is formed integrally with the resin base 92, and a starter circuit and a high voltage transformer (not drawn) are housed within the driver case 93 so as to provide for a lighting unit 90. A headlamp 80 can then be implemented with a 12V supply.

With the above lighting unit 90, the structure for mounting the lighting unit 90 to the reflector 81 is the same as the structure for mounting the resin base 92. Therefore, when the mounting to the reflector 81 has been carried out as shown in FIG. 3, there is the problem that leaks often occur between the electrodes and the metal plated reflector 81 or a hood 82 mounted to the reflector.

In addition, when either one of the discharge lamp 91 or the driver becomes defect, the whole of the lighting unit 90 has to be changed because the driver case 93 is formed integrally with the resin base 92, which is not an effective manner to utilize resources. It is also necessary to perform the troublesome operation of separating the driver and the discharge lamp 91 when the unit is scrapped, which increases overall costs.

### SUMMARY OF THE INVENTION

The present invention is directed to a vehicle discharge lighting unit that substantially obviates one or more of the above problems due to the limitations and disadvantages of a conventional vehicle discharge lighting unit.

It is an object of the present invention to enable an easier way to change the discharge lamp. The vehicle discharge lighting unit is formed so as to be separable into a front case and a rear case and the resin base supporting the discharge lamp is formed integrally with the front case, so that changing of the discharge lamp is possible.

It is another object of the invention to form a vehicle discharge lighting unit which has the combination of the resin base and the driver case with the reflector without complicating the assembly process and the occurrence of leaks between the high voltage terminal and the leg part of the hood, that took easily place in the related art, is prevented, and it has a better service ability.

According to the present invention, the above objects are achieved by providing a vehicle discharge lighting unit with an integrally formed discharge lamp, a starter circuit, and a high voltage transformer comprises a bulb mounting slot, a mounting flange, and a burner band mounting section. The bulb mounting slot is provided at a resin base mounted at a discharge lamp bulb section, whose slot diameter fits to an outer bulb section of the discharge lamp bulb section and has a broad input-side slot width. The mounting flange is for supporting the resin base to a reflector and for mounting a driver case, which houses a starter circuit and a high voltage transformer, to a reflector. The burner band mounting section extends along a discharge chamber direction and projects into the reflector.

Further, in the present invention the driver case is formed so as to be separable into a front case and a rear case along a direction at the resin base substantially orthogonal to the axis of the discharge lamp, and the resin base supporting the discharge lamp is formed integrally with the front case, so that changing of the discharge lamp is possible.

### BRIEF DESCRIPTION OF THE DRAWINGS

FIG. 1 is a cross-section showing an embodiment of a vehicle discharge lighting unit of the present invention.
FIG. 2 is a cross-section showing a further embodiment of a vehicle discharge lighting unit of the present invention.
FIG. 3 is a cross-section showing a resin base of a prior art example.
FIG. 4 is a view illustrating a further prior art example.

### DETAILED DESCRIPTION OF THE PREFERRED EMBODIMENTS

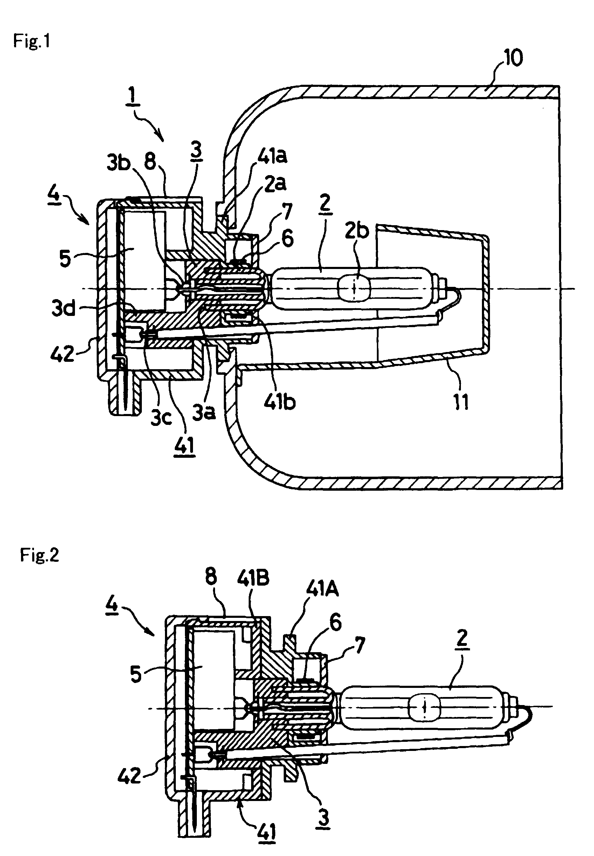

Next, a detailed description of the present invention is given based on an embodiment shown in the drawings. In FIG. 1, numeral 1 indicates a vehicle discharge lighting unit (hereinafter abbreviated to lighting unit 1) relating to the present invention. The basic configuration of the lighting unit 1 is the same as for the prior art with the lighting unit 1 comprising a discharge lamp 2, a resin base 3 and a driver case 4.

In the present invention, the resin base 3 for supporting the discharge lamp 2 and the driver case 4 for housing a driver unit 5 of a starter circuit and a high voltage transformer etc. are not formed integrally, but rather have a configuration optimized with respect to ensuring resistance with respect to the aforementioned high voltages and with respect to maintenance, etc.

The following is a detailed description of the configuration of the present invention. First, in the present invention, a flange is not provided at the resin base 3. A bulb mounting slot 3a engages with the end of an outer bulb section 2a of the discharge lamp 2. The resin base 3 basically determines the positioning of the discharge lamp 2.

At this time, the slot width of the bulb mounting slot 3a is made appropriately broader than the thickness of the outer bulb section 2a at the entrance side but is substantially the same as the thickness of the outer bulb section 2a near the bottom. There is also tolerance to shake the discharge chamber 2b to align with the reflector

As in the prior art example, the resin base 3 is provided with a high voltage terminal 3b and a low voltage terminal 3c for supplying power to the discharge lamp 2 and a partition wall 3d between the terminal 3b and 3c so as to ensure dielectric strength to high voltages (25,000V) applied between the terminals 3b and 3c.

The driver case 4 comprises a body 41 and a cover 42 sealed in a box shape. When the cover 42 is removed a structure which comprises the resin base 3 with the discharge lamp 2 can be inserted at the open side of the body, and the body is provided with a portion that partially covers the resin base 3 from the side of the discharge lamp 2 so that a position can be determined using a projection when inserted. The body 41 is capable of housing the driver unit 5.

In the present invention, a mounting flange 41a is provided around the body 41 in correspondence to the positioning provided by the mounting flange at the resin base of the prior art example where the positioning with respect to the reflector was determined by the aforementioned projection. With respect to the reflector 10 in the present invention the positioning is determined by the body 41 and the flange 41a. In addition, a burner band mounting section 41b projecting to the reflector 10, is provided at the body 41 of the present invention.

When the lighting unit 1 of the present invention is assembled, an end of the outer bulb section 2a is inserted at the bulb mounting slot 3a, wiring up to the high voltage terminal 3b is carried out, and the resin base 3 with the discharge lamp 2 is inserted to the body 41 from the opened side. After this, a burner band 6 is fitted to the burner band mounting section 41b of the body 41, the position of the discharge chamber 2b to the mounting flange 41 a is determined, and the discharge lamp 2 is fixed in said position to the body 41 by welding, e.g.using laser heating.

A ceramic plate 7 for protecting the body 41 and the resin base 3 from heat generated by the discharge chamber 2b during lighting is attached to the tip of the body 41 and wired to the low voltage terminal 3c as in the prior art example. The driver unit 5 (high voltage transformer, starter circuit, etc.,) is incorporated within the body 41 and covered with the cover 42 so that the high voltage portion is sealed.

The operation and effects of the lighting unit 1 of the present invention of the above configuration will now be described. Because the resin base 3 and the driver case 4 of the present invention are formed separately, optimum shapes can be provided (for the resin base 3 and the driver case 4 without lowering the dielectric strength to high voltages or the ease of construction. In the drawings, numeral 8 indicates a metal case that is provided to shield electromagnetic noise radiated from the driver unit 5.

In particular, this configuration provides particularly good fine adjustment of the position of the discharge chamber 2b because the discharge lamp 2 is already supported by the resin base 3 in a state where swinging of the discharge lamp 2 is possible at the body 41 of the driver case 4, and extension in the direction of the discharge chamber 2b is possible without lowering easy construction. The creeping distance between the high voltage terminal 3b and a hood 11 provided at the reflector 10 can therefore be drastically lengthened while the problems that occurred easily in the prior art example are resolved.

As a result of the above, the body 41 projects into the reflector 10. However, originally, the projecting portion of the body 41 was ineffective because it was covered by the hood 11 which in turn prevents direct light from the discharge lamp 2 to radiate to the outside. Therefore there is no influence on the performance and since the projecting portion cannot be seen from the outside because of the hood 11, there is no deterioration in the asthetic appearance.

FIG. 2 shows a further embodiment of the present invention. The resin base 3 and the driver case 4 are also formed separately in this embodiment and have also shapes that are the same as in the previous embodiment. However, in this embodiment, the body 41 is separated into a front case 41A that engages with the resin base 3 so as to become fixed, and a rear case 41B that is not fixed to the resin base 3.

In the normal state, the front case 41A and the rear case 41B are connected by a screwor using other appropriate means, and the process of assembly with the discharge lamp 2 and the process of fitting to the reflector 10 is exactly the same as for the previous embodiment.

When one of either the discharge lamp 2 or the driver unit 5 becomes defect and if the fastening of the front case 41A and the rear case 41B is released, the front case 41A and the rear case 41B can be separated with the discharge lamp 2 and the resin base 3 being attached to the front case 41A and the driver unit 5 being attached to the rear case 41B and subsequently the part which has become defect can be easily replaced.

In the present invention, by providing a vehicle discharge lighting unit with a bulb mounting slot provided at a resin base mounted at a discharge lamp bulb sectionand with a slot diameter that fits to an outer bulb section of the discharge lamp bulb section and with a broader input-side, a mounting flange for mounting a driver case supporting the resin base and housing a starter circuit and a high voltage transformer to a reflector, and a burner band mounting section extending along a discharge chamber direction so as to cover the resin base from the discharge lamp-side and projecting into the reflector, the following can be achieved: optimum shapes can be provided taking into consideration the combination of the resin base and the driver case with the reflector without complicating the assembly process, the occurrence of leaks between the high voltage terminal and the leg part of the hood that took place easily in the prior art is prevented, and service ability is improved.

In addition, the driver case is formed so as to be separable into a front case and a rear case along a direction at the resin base substantially orthogonal to the axis of the discharge lamp, and the resin base supporting the discharge lamp is formed integrally with the front case. The discharge lamp and the driver unit can therefore be separated so that if either one has become defect, just the part that has become defect can be replaced. This means that the costs of maintenance for the consumer can be reduced and that separating at the time of scrapping by the manufacturer is easy, so the scrapping process becomes easier and can be improved.

## Claims

1. A vehicle discharge lighting unit (1) with an integrally formed discharge lamp (2), a starter circuit, and a high voltage transformer, said unit further comprising:
a bulb mounting slot (3a) provided in a resin base (3) mounted at a bulb section of said discharge lamp, said slot having a slot width (diameter) which fits together with an outer bulb section (2a) of the discharge lamp (2) , said bulb mounting slot having a broad input-side slot width;
a mounting flange (41a) for supporting the resin base (3) and for mounting a driver case (4), which houses a starter circuit and a high voltage transformer, said mounting flange (41a) being adapted to be mounted to a reflector (10) ; and
a burner band (6) mounting section (41b) extending along the direction of the discharge chamber (2b) of the discharge lamp (2) and projecting into the reflector (10).

2. The vehicle discharge lighting unit (1) of claim 1, wherein the driver case (4) is formed so as to be separable into a front case (41A) and a rear case (41B) and the resin base (3) supporting the discharge lamp (2) is formed integrally with the front case (41A), so that changing of the discharge lamp (2) is possible.

3. The vehicle discharge lighting unit (1) of claim 1 or 2, wherein the burner band (6) fixes the outer bulb section (2a) of the discharge lamp (2).

4. The vehicle discharge lighting unit (1) of claim 1, wherein the outer bulb section (2a) is fixed in the slot (3a) which has a broader input-side, so that the discharge chamber (2b) is movable to decide its position with respect to the reflector (10),

5. The vehicle discharge lighting unit (1) of claim 1,wherein the front case (41A) and rear case (41B) is separable along a direction at the resin base 3 substantially orthogonal to the axis of the discharge lamp (2).

6. A vehicle discharge lighting unit (1) adapted to be connected to a reflector (10), said unit comprising:
a discharge lamp (2),
a resin base (3) mounted at an outer bulb section (2a) of said discharge lamp (2), said resin base comprising a bulb mounting slot (3a) to accommodate a least part of said outer bulb section, said slot (3a) having a slot width (diameter) which fits together with the outer bulb section (2b) and said slot having a broad input side slot width.
a driver case (4) adapted to support said resin base (3), said driver case (4) having a starter circuit and a high voltage transformer and comprising a mounting flange (41a), said driver case (4) being adapted to be mounted at said reflector (10).

7. A vehicle discharge lighting unit (1) as set forth in claim 6, wherein said drive case comprises a body (41) forming said mounting flange, said mounting flange (41a) being adapted to mount said driver case to said reflector (10)

8. A vehicle discharge lighting unit (1) as set forth in claim 7, wherein said body forms a burning band mounting section (41b), adapted to support at least a part of the outer bulb section (2a).

9. A vehicle discharge lighting unit (1) as set forth in claim 6, further comprising a partition wall (3d) between the driver unit (5) supported by the driver case (4) and the low-voltage terminal (3c) of the resin base.

10. A vehicle discharge lighting unit (1) as set forth in claim 6, wherein the driver case (4) further comprises a cover (42) which can be opened for providing access to the interior of the driver case (4).
